# EUROPÄISCHE PATENTANMELDUNG

(11) **EP 0 985 441 A1**
(43) Veröffentlichungstag der Anmeldung: **15.03.2000**
(21) Anmeldenummer: 99250311.0
(22) Anmeldetag: 07.09.1999
(51) Int. Cl.: B01D 53/85, B01D 46/30, B09B 1/00, E21B 43/08

(54) **Luftdurchlässige Geruchssperre**

(30) Priorität: 09.09.1998 DE 19841290
(71) Anmelder: RETEC Recycling, Entwicklungs- und Technologiegesellschaft mbH, 17033 Neubrandenburg (DE)
(72) Erfinder: Pfeifer, Manfred, Dr., 17033 Neubrandenburg (DE); Mohnsame, Bernd, 17033 Neubrandenburg (DE); Klemm, Heiko, 17291 Prenzlau (DE)
(74) Vertreter: Fleischer, Harald

(57) **Zusammenfassung**

Die Erfindung betrifft eine luftdurchlässige Geruchssperre nach dem Prinzip eines biologischen Filters. Aufgabe der Erfindung ist es, eine Vorrichtung zu schaffen, die luftdurchlässig ist und gleichzeitig den Durchtritt von biologisch abbaubaren Geruchs- und Schadstoffen deutlich reduziert. Kernstück der Vorrichtung ist ein luftdurchlässiger biologischer Geruchs- und Schadstoffilter 1, der aus luftdurchlässigen Ober- und Unterplatten 2 und 3 sowie einem flexiblen Umfangselement 4 besteht, zwischen denen sich das biologisch aktive Filtermaterial 5 befindet. Durch den Filter 1 sind Gewindebolzen 6 hindurch geführt. Das Anziehen der Muttern 7 bewirkt eine Verringerung der Dicke bei gleichzeitiger Vergrößerung des Umfangs des Filters 1. Durch die Vergrößerung des Umfangs wird der Filter 1 in das Schachtelement 8 eingepreßt und mit diesem kraftschlüssig und umfangsdicht verbunden. Das biologisch aktive Material im Inneren des Filters 1 besteht aus einem Granulat aus Altpapier, das mit einem Biofaktor aktiviert worden ist. Auf dem mit dem Biofaktor aktivierten Granulat bildet sich im feuchten Zustand ein biologischer Rasen, der in der Lage ist, die durch den Filter 1 geleiteten Gase von biologisch abbaubaren Geruchs- und Schadstoffen zu befreien.

## Beschreibung

Die Erfindung betrifft eine luftdurchlässige Geruchssperre, die nach dem Prinzip eines biologischen Filters arbeitet.

### [Stand der Technik]

Absterbende organische Substanzen - Pflanzenreste, abgestorbene Tiere und Mikroorganismen - führen, wenn das Absterben unter sauerstoffarmen Bedingungen erfolgt, zur Fäulnis. Die Faulprodukte sind meist durch Humusstoffe tiefschwarz gefärbt und reich an Schwefelverbindungen, darunter Schwefelwasserstoff, der für den fauligen Geruch sorgt.

Faulige Gerüche werden als unangenehm und abstoßend empfunden und mindern da, wo sie auftreten, die Wohn- und Lebensqualität. Sie sind da zu beobachten, wo technische Systeme, die den Transport, der Endlagerung und der Verwertung biologischer Stoffe dienen (z.B. Abwasserkanalisationssysteme, Tierkörperbeseitigungsanlagen, abgedeckte Mülldeponien, Kompostieranlagen), Faulgase an die Umgebung abgeben.

Das Austreten der bei der Müllentsorgung auf öffentlichen Deponien entstehenden Faulgase versucht man dadurch zu minimieren, indem man in sogenannten geordneten Deponien den Abfall in einer wannenförmigen Senke in dünnen Schichten verteilt. Jede Schicht wird von einem Bulldozer zusammengepresst (Müllverdichtung), bevor man die nächste Schicht aufbringt. Zwischen den Schichten wird eine Lage aus Bauschutt oder Erde aufgetragen, um die Geruchsbelästigungen zu verringern. Hat die Deponie eine Höhe von etwa 30 bis 100 Metern erreicht, wird die Fläche mit Erde bedeckt und rekultiviert. Die über einen langen Zeitraum durch die Zersetzung der organischer Abfälle entstehenden Deponiegase müssen kontrolliert abgeleitet werden.

Art und Menge des anfallenden Deponiegases ist vom deponierten Material abhängig. Die Hauptbestandteile der von Deponien abgegebenen Gase sind zu etwa 60 % Methan und zu etwa 39% Kohlendioxid. Hinzu kommt eine große Anzahl organischer und anorganischer Gase, wie etwa Schwefelwasserstoff und Chlorkohlenwasserstoffe. Diese Gase sind, da sowohl Methan als auch Kohlendioxid geruchlos und nicht giftig sind, für die von Deponien ausgehende Geruchsbelästigung und Gesundheitsgefährdung verantwortlich. Daher muß Deponiegas in der Nähe von Siedlungen wegen seines Schadstoffgehaltes abgesaugt werden.

Dem Deponiegas ähnlich in der Zusammensetzung ist das von Abwasserkanalisationssystemen, Tierkörperbeseitigungsanlagen, und Kompostieranlagen abgegebene Gas. Bei all diesen Systemen und Anlagen besteht das Problem, die Geruchsbelästigung und Gesundheitsgefährdung durch diese Gase zu verhindern bzw. zu verringern.

### [Aufgabe der Erfindung]

Der Erfindung liegt daher die Aufgabe zugrunde, eine Vorrichtung zu schaffen, die luftdurchlässig ist und gleichzeitig den Durchtritt von biologisch abbaubaren Geruchs- und Schadstoffen deutlich reduziert.

Gelöst wird diese Aufgaben durch eine Vorrichtung, durch die geruchs- und schadstoffbelastete Gase hindurch geleitet werden, bevor sie an die Umgebung abgegeben werden. Die Vorrichtung besteht aus einem Behälter gefüllt mit einer biologisch aktiven Substanz, die mit einem Biofaktor aktiviert ist. Der Behälter wird im Abgasstrom angeordnet. Auf der biologisch aktiven Substanz bildet sich ein biologischer Rasen, der aus dem den Behälter durchströmenden Gas die Geruchs- und Schadstoffe biologisch abbaut, so daß die an die Umgebung abgegebenen Gase einen deutlich reduzierten Geruchs- und Schadstoffgehalt aufweisen.

### [Beispiele]

Nachfolgend wird die Erfindung anhand eines Ausführungsbeispiels erläutert.

Es zeigen:
- Fig. 1: eine erfindungsgemäße Vorrichtung, eingebaut in einen Abwassergully (geschnitten),
- Fig. 2: eine Draufsicht auf die erfindungsgemäße Vorrichtung ohne Schachtdeckel und Schmutzfänger.

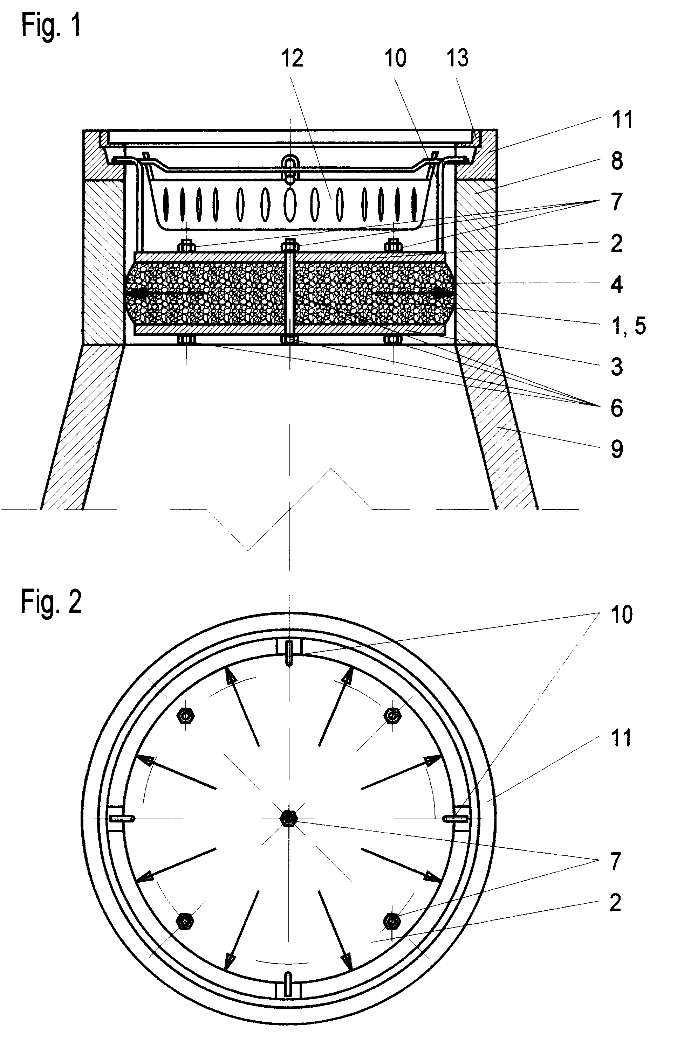

Das Kernstück der erfindungsgemäßen Vorrichtung gemäß Figur 1 ist ein luftdurchlässiger biologischer Geruchs- und Schadstoffilter 1, der aus luftdurchlässigen Ober- und Unterplatten 2 und 3 sowie einem flexiblen Umfangselement 4 besteht, zwischen denen sich das biologisch aktive Filtermaterial 5 befindet. Durch den Geruchs- und Schadstoffilter 1 sind Gewindebolzen 6 hindurch geführt. Das Anziehen der Muttern 7 bewirkt eine Verringerung der Dicke bei gleichzeitiger Vergrößerung des Umfangs des Filters 1. Durch die Vergrößerung des Umfangs wird der Filter 1 in das Schachtelement 8 eingepreßt und mit diesem kraftschlüssig und umfangsdicht verbunden. Das vom Schachtelement 9 zum Schachtelement 8 geleitete Gas kann daher das Schachtelement 8 nur durch den Filter 1 verlassen.

Das biologisch aktive Material im Inneren des Filters 1 besteht aus einem Granulat aus Altpapier, das mit einem Biofaktor aktiviert worden ist. Auf dem mit dem Biofaktor aktivierten Granulat bildet sich im feuchten Zustand ein biologischer Rasen, der in der Lage ist, die durch den Filter 1 geleiteten Gase von biologisch abbaubaren Geruchs- und Schadstoffen zu befreien.

Über dem Filter 1, der durch zusätzliche Halteelemente 10 gesichert werden kann, sind die bekannten weiteren Elemente eines Abwassergullys wie Schachtabdeckung 11, Schmutzfänger 12 und Schachtdeckelrahmen 13 angeordnet.

Der Filter 1 läßt sich auf die oben geschilderte Weise in jede rohrförmige Öffnung einbauen, durch die geruchs- und schadstoffbelastete Gase an die Umwelt abgegeben werden, wie etwa in Entlüftungsanlagen von Tierkörperbeseitungsunternehmen oder in Gasableitungssysteme von Hausmülldeponien. Da diese Systeme in der Regel einen Überdruck gegenüber der Umwelt entwickeln, wird das belastete Gas zwangsweise durch den erfindungsgemäßen Filter 1 geleitet und besondere drukkerhöhende Vorrichtungen sind nicht erforderlich.

Figur 2 zeigt eine Draufsicht auf die erfindungsgemäße Vorrichtung ohne Schachtdeckel und Schmutzfänger. Die sternförmig angeordneten Pfeile verdeutlichen die aus der Verringerung der Filterdicke resultierenden Radialkräfte.

### [Bezugszeichenliste]

- 1: biologischer Geruchs- und Schadstoffilter
- 2: Oberplatten
- 3: Unterplatten
- 4: Umfangselement
- 5: Filtermaterial
- 6: Gewindebolzen
- 7: Mutter
- 8: Schachtelement
- 9: Schachtelement
- 10: Halteelement
- 11: Schachtabdeckung
- 12: Schmutzfänger
- 13: Schachtdeckelrahmen

## Patentansprüche

1. Luftdurchlässige Geruchssperre, dadurch gekennzeichnet, daß
a) luftdurchlässige Ober- und Unterplatten (2) und (3) im Zusammenwirken mit einem flexiblen Umfangselement (4) einen Filter (1) bilden, in dem sich eine mit einem Biofaktor aktivierte biologisch aktive Substanz (5) befindet,
b) sich der Umfang des Filters (1) durch Verringerung des Abstands zwischen den Platten (2) und (3) vergrößert.

2. Luftdurchlässige Geruchssperre nach Anspruch 1, dadurch gekennzeichnet, daß die biologisch aktive Substanz (5) aus einem feuchten Granulat aus Altpapier besteht, das mit einem Biofaktor aktiviert ist.

3. Luftdurchlässige Geruchssperre nach den Ansprüchen 1 und 2, dadurch gekennzeichnet, daß der Filter (1) durch Verringerung des Abstandes zwischen den Platten (2) und (3) in Schacht- und/oder Ableitungselementen kraftschlüssig und umfangsdicht fixiert ist.

4. Luftdurchlässige Geruchssperre nach den Ansprüchen 1 bis 3, dadurch gekennzeichnet, daß der Filter (1) zusätzlich durch Halteelemente (10) in seiner Position fixiert wird.
